# EUROPEAN PATENT APPLICATION

(11) **EP 3 748 412 A1**
(43) Date of publication of application: **09.12.2020**
(21) Application number: 19199035.7
(22) Date of filing: 23.09.2019
(51) Int. Cl.: G02B 19/00, F21V 7/00, F21V 7/05, G02B 26/08, A47G 1/06, G02B 7/182

(54) **ELECTRONIC MIRROR SCREEN WITH LIGHT FILLING STRUCTURE**

(30) Priority: 05.06.2019 TW 108207166 U
(71) Applicant: CAL-COMP BIG DATA, INC, Shenkeng, New Taipei City 222 (TW)
(72) Inventor: Hung, Ming-Hua, 222 NEW TAIPEI CITY (TW)
(74) Representative: 2K Patentanwälte Blasberg Kewitz & Reichel

(57) **Abstract**

An electronic mirror screen with a light filling structure includes a first and second mirror screen main bodies (1), (2) and a linkage mechanism (3). The first mirror screen main body (1) includes a first moving portion (10) and a first light emitting portion (11). The second mirror screen main body (2) includes a second moving portion (20) and a second light emitting portion (21) having a receiving space (200) provided for the first moving portion (10) to be received therein. The first and second light emitting portions (11), (21) respectively located at two opposite sides of the first and second moving portions (10), (20). The linkage mechanism (3) arranged between the first and second moving portions (10), (20) and located at one side of the receiving space (200), includes a movable light guiding plate (30) and a linkage assembly (31) for driving the movable light guiding plate (30).

## Description

### BACKGROUND OF THE INVENTION

### Field of the Invention

The technical field relates to an electronic mirror screen, in particular, to an electronic mirror screen with a light filling structure.

### Description of Related Art

An electronic mirror screen is a digitized electronic mirror, and it mainly utilizes a camera lens to capture images of a human body, followed by presenting on the screen via mirror reflection method, in order to achieve the effect of allowing the user to view his or her face from the screen in a way similar to viewing from a mirror. However, to provide sufficient luminance in the environment to allow the camera to capture images, light source can be installed on the electronic mirror screen and the principle of reflection of light can be used. Consequently, when the light source is shone onto the face of a user, it is able to achieve the auxiliary lighting effect on the face, thereby facilitating the camera lens to capture the facial images.

Nevertheless, as the function and design of electronic mirror screens become diverse, when an electronic mirror screen is designed to have a moving structure for collapsing and deployment etc., the light source located on the electronic mirror screen moves along with the moving direction of the structure, such that the light projection location from the light source is also changed. Under the condition where the face of a user remains stationary, light from the light source after the movement cannot be ensured to be projected onto the face of the user. Consequently, the light filling effect lacks uniformity, and the image presented on the screen is also affected at the same time.

In view of above, the inventor seeks to overcome the aforementioned drawbacks associated with the currently existing technology after years of research and development along with the utilization of academic theories, which is also the objective of the development of the present invention.

### SUMMARY OF THE INVENTION

The disclosure is directed to an electronic mirror screen with a light filling structure. It is applied to collapsible and deployable electronic mirror screen. In addition, when the electronic mirror screen is performing the aforementioned collapsing or deployment action, the light source installed thereon is able to move accordingly through a mechanism in order to maintain the light projection position on the user's face. Consequently, it is able to maintain the light source projection of the user's face without affecting the light filling effect.

One of the exemplary embodiments, an electronic mirror screen with a light filling structure is provided. The electronic mirror screen with a light filling structure comprises a first mirror screen main body, a second mirror screen main body and a linkage mechanism. The first mirror screen main body includes a first moving portion and a first light emitting portion arranged at one side of the first moving portion. The second mirror screen main body includes a second moving portion and a second light emitting portion arranged at one side of the second moving portion, and the second moving portion includes a receiving space formed therein and provided for the first moving portion to be received therein and attached thereto. The first and second light emitting portions are respectively located at two opposite sides of the first and second moving portions away from each other. The linkage mechanism is arranged between the first and second moving portions and located at one side of the receiving space. In addition, the linkage mechanism comprises a movable light guiding plate and a linkage assembly configured to drive the movable light guiding plate to move. Furthermore, the first and second moving portions move relative to each other under a pulling force exerted thereon, and when the first and second moving portions moves relative to each other, the linkage assembly drives the movable light guiding plate to move.

### BRIEF DESCRIPTION OF DRAWING

FIG. 1 is a perspective exploded view of the first and second mirror screen main body of the present invention viewed from the top;
FIG. 2 is an illustration showing the first and second mirror screen main body of the present invention;
FIG. 3 is a perspective view of the linkage mechanism of the present invention;
FIG. 4 is a perspective exploded view of the linkage mechanism of the present invention;
FIG. 5 is a cross sectional view showing the state during the collapsing of the present invention;
FIG. 6 is a cross sectional view showing the state during the deployment of the present invention;
FIG. 7 is a partial enlarged view of FIG. 6;
FIG. 8 is a schematic view showing a state of use when the present invention is collapsed to provide light filling on a user's face; and
FIG. 9 is a schematic view showing a state of use when the present invention is deployed to provide light filling on a user's face.

### DETAILED DESCRIPTION OF THE INVENTION

The following provides a detailed technical content of the present invention along with the accompanied drawings. However, the accompanied drawings are provided for reference and illustrative purpose only such that they shall not be used to limit the scope of the present invention.

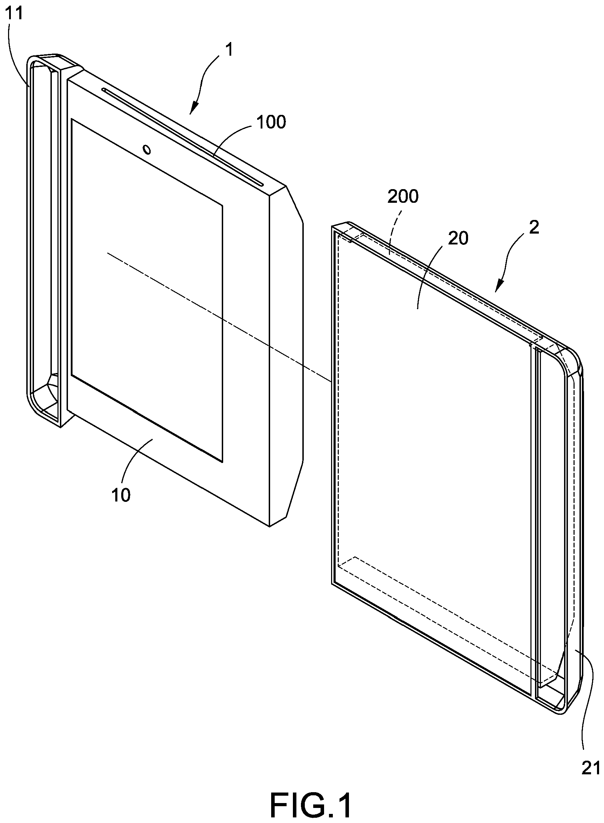

The present invention provides an electronic monitor screen with a light filling structure, capable of maintaining a uniform luminance of the light source and light filling projected onto a user's face under different states of use, such as collapsing and deployment, of the electronic mirror screen. Please refer to FIG. 1, FIG. 2 and FIG. 3. The electronic mirror screen comprises a first mirror screen main body 1, a second mirror screen main body 2 and a linkage mechanism 3.

The first mirror screen main body 1 includes a first moving portion 10 and a first light emitting portion 11 arranged at one side of the first moving portion 10. The first moving portion 10 can be a display screen, and it can be a display for independent imaging, or it can use, such as a camera lens, to film facial images for further displaying on said display screen. The first light emitting portion 11 can be a slot structure, and it includes a first light source 110 and a fixed light guiding plate 111 installed therein. The first light source 110 can be a circuit board structure comprising a circuit board and light emitting diodes, and it can be arranged opposite from the fixed light guiding plate 111 in order to project the light generated onto the fixed light guiding plate 111, Then, the fixed light guiding plate 111 is able to produce uniform lighting for light filling through the first light transmissive plate 12 covered on the first light emitting portion 11.

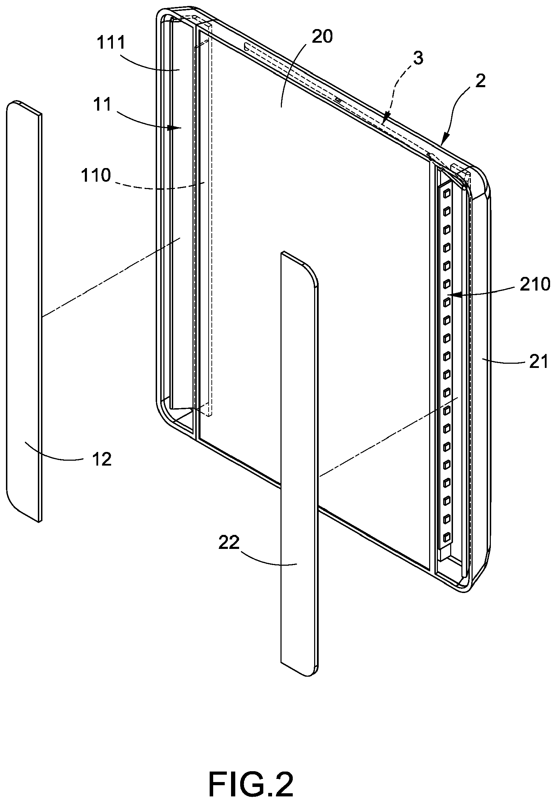

The second mirror screen main body 2 includes a second moving portion 20 configured to be received in and attached to the aforementioned first moving portion 10. The second moving portion 20 can include a mirror, and it also includes a receiving space 200 formed therein in order to laterally receive the first moving portion 10 therein, such that the first moving portion 10 can be collapsibly received inside the receiving space 200 (as shown in FIG. 2), and the mirror of the second moving portion 20 is able to shield a front portion of the display screen of the first moving portion 10. In addition, the second moving portion 20 includes a second light emitting portion 21 arranged at one side of the second moving portion 20, and the first and second light emitting portions 11, 21 are located at two opposite sides of the first and second moving portions 10, 20 away from each other. Furthermore, the second light emitting portion 21 can also be a slot structure, and it includes a second light source 210 installed therein. The second light source 210 can also be a circuit board structure comprising a circuit board and light emitting diodes, and the second light emitting portion includes a second light transmissive plate 22 covered thereon.

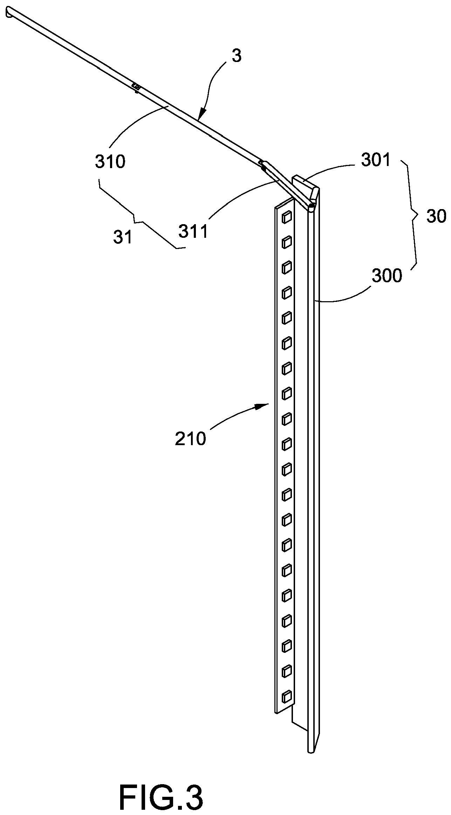

The linkage mechanism 3 is arranged between the aforementioned first and second moving portions 10, 20, and is located at one side of the receiving space 200. As shown in FIG. 3, the linkage mechanism 3 comprises a movable light guiding plate 30 and a linkage assembly 31 driving the movable light guiding plate 30 to perform rotation. The movable light guiding plate 30 is arranged inside the aforementioned second light emitting portion 21 and is arranged opposite from the second light source 210, in order to project the light generated by the second light source 210 onto the movable light guiding plate 30, following which once the movable light guiding plate 30 produces uniform lighting for light filling through the second light transmissive plate 22.

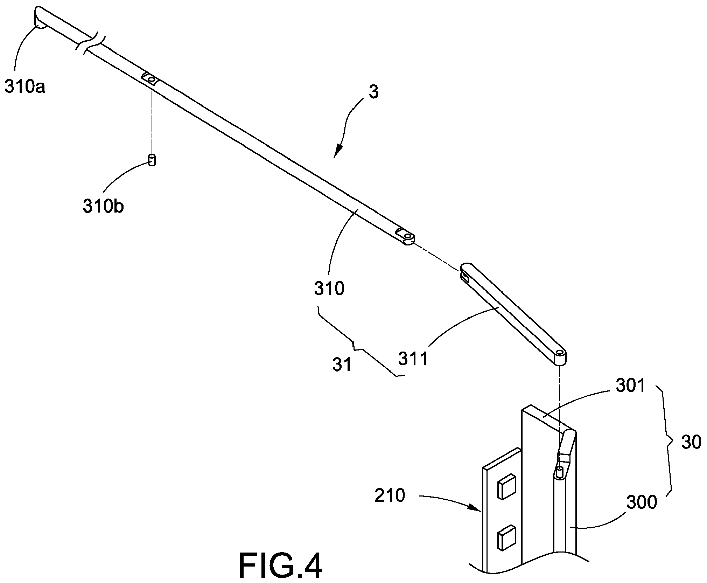

Please refer to FIG. 1, FIG. 3 and FIG. 4. The present invention mainly uses the linkage assembly 31 of the aforementioned linkage mechanism 3 to drive the movable light guiding plate 30 in order to achieve automatic angle adjustment of the movable light guiding plate 30 when the first and second mirror screen main bodies 1, 2 move relative to each other, such that the light projected from the second light source 210 can be maintained at the position directed to the user's face, thereby maintaining light projection on the user's face without affecting the light filling effect. The linkage assembly 31 includes a first connecting rod 310 movably connected to the first moving portion 10 and a second connecting rod 311 configured to drive the first connecting rod 310 to move, and the second connecting rod 311 is pivotally attached onto the movable light guiding plate 30. The movable light guiding plate 30 may include a light guiding surface 300 and a supporting surface 301 for supporting the light guiding surface 300. In an exemplary embodiment of the present invention, the first moving portion 100 includes a first sliding track 100 formed thereon, and the first connecting rod 310 includes a first sliding portion 310a formed thereon and configured to slide inside the first sliding track 100. In addition, the first connecting rod 310 can also be connected to the second moving portion 20 via a second sliding portion 310b, such that through the sliding between the first and second moving portions 10, 20, the swinging movement of the first connecting rod 310 is able to drive the second connecting rod 311 in order to adjust the movable light guiding plate 30 to perform rotation, thereby maintaining the position of light projection onto the user's face.

In view of the above, with the aforementioned structure and assembly, an electronic mirror screen with a light filling structure of the present invention can be achieved.

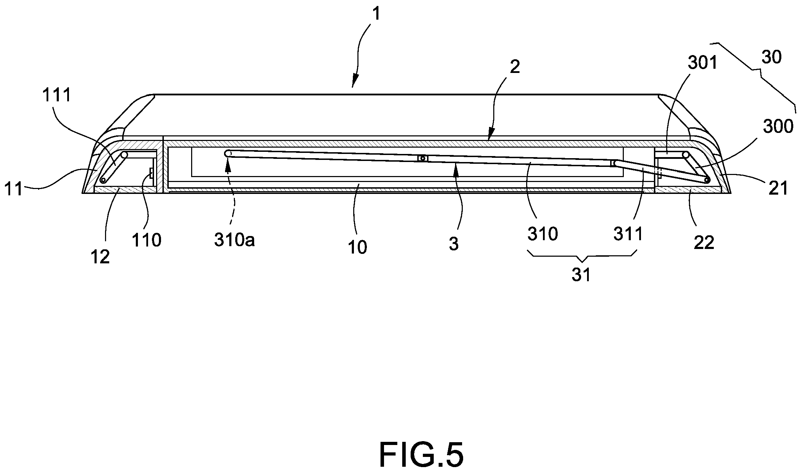

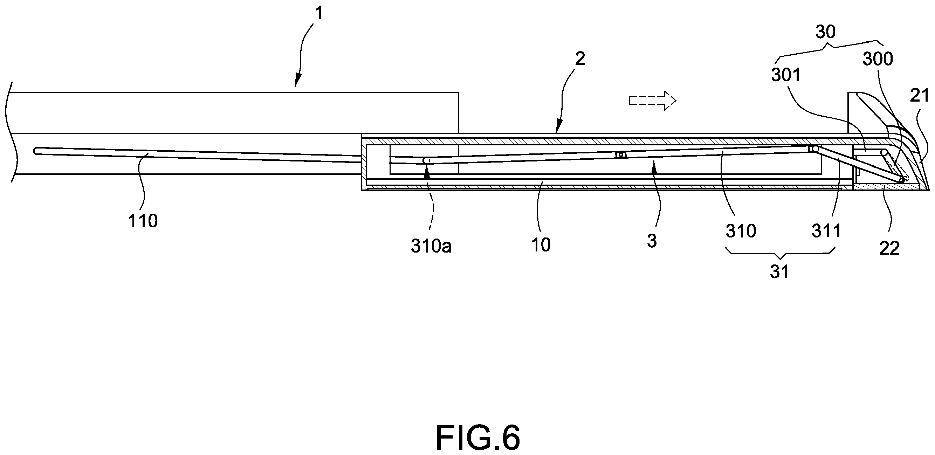

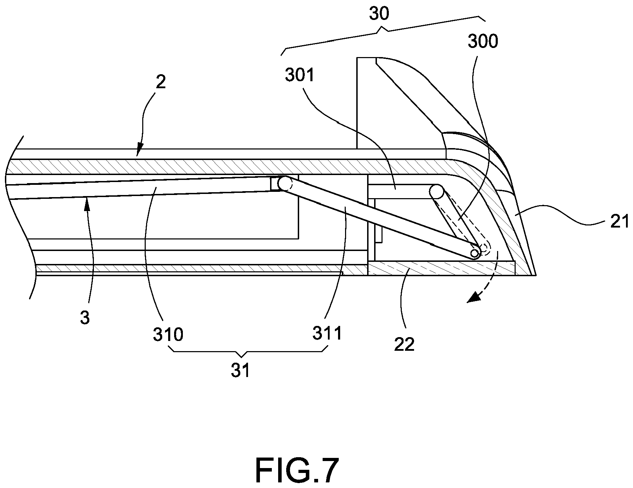

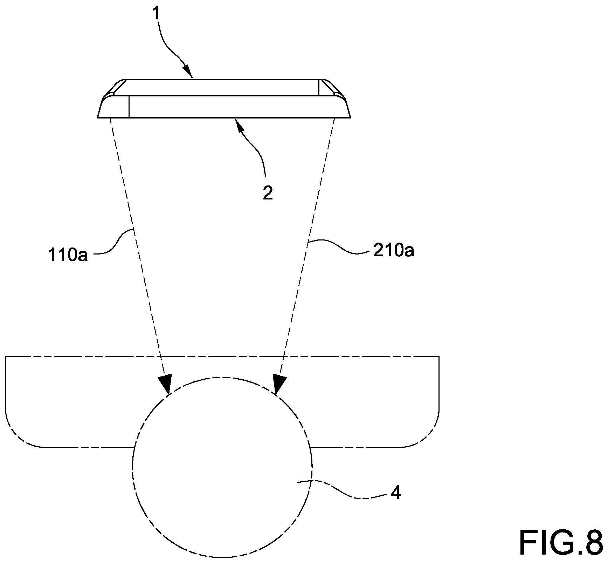

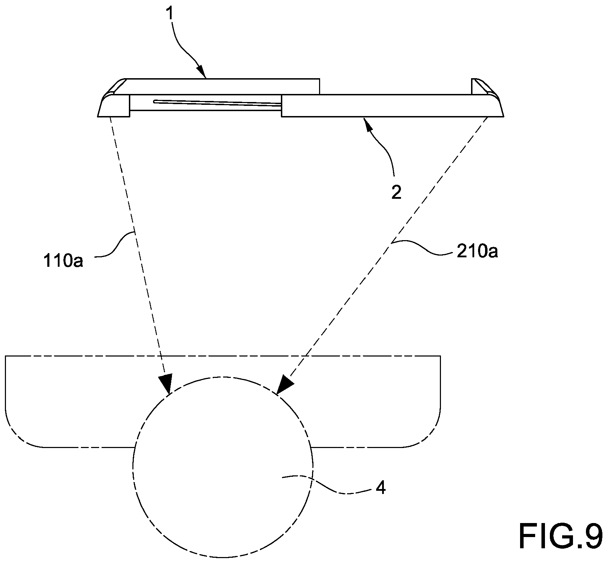

Accordingly, as shown in FIG. 5, when the aforementioned first and second mirror screen main bodies 1, 2 are collapsed, the fixed light guiding plate 11 and the movable light guiding plate 30 are designed to be at proper angle and position for projecting the light from the first and second light sources 110, 210 onto the user's face, as shown in FIG. 8. The light 110a, 210a respectively projected from the first and second light sources 110, 210 is directed onto the user's face for light filling. At the beginning of the use of the first and second mirror screen main bodies 1, 2, as shown in FIG. 6 and FIG. 7, the first connecting rod 310 of the linkage assembly 31 is able to swing between the first and second moving portions 10, 20, such that it is able to drive the second connecting rod 311 to move and to further drive the movable light guiding plate 30 to move inward, such that the light projection angle of the light projected from the second light source 210 is also changed due to the adjustment of the movable light guiding plate 30, as shown in FIG. 9. When the second mirror screen main body 2 is deployed and being pulled outward, in a conventional design, the light 210a projected from the second light source 210 would also move away from the user's face; however, with the design of the aforementioned linkage assembly 31 in the present invention, the movable light guiding plate 300 can be adjusted correspondingly in such a way that during the process in which the second mirror screen main body 2 is being pulled outward, the movable light guiding plate 30 is adjusted to allow the light 210a projected from the second light source 210 to be maintained at the position directed to the user's face, thereby preventing any loss of light filling effect.

In view of the above, the present invention is a novel design capable of achieving the objectives of the present invention and overcoming the drawbacks of known arts. The present invention is novel and of inventive step, which satisfies the patentability requirements.

## Claims

1. An electronic mirror screen with a light filling structure, comprising:
a first mirror screen main body (1) having a first moving portion (10) and a first light emitting portion (11) arranged at one side of the first moving portion (10);
a second mirror screen main body (2) having a second moving portion (20) and a second light emitting portion (21) arranged at one side of the second moving portion (20), and the second moving portion (20) having a receiving space (200) formed therein and provided for the first moving portion (10) to be received therein and attached thereto, and the first and second light emitting portions (11), (21) respectively located at two opposite sides of the first and second moving portions (10), (20) away from each other; and
a linkage mechanism (3) arranged between the first and second moving portions (10), (20) and located at one side of the receiving space (200), and the linkage mechanism (3) comprising a movable light guiding plate (30) and a linkage assembly (31) configured to drive the movable light guiding plate (30) to move; wherein the first and second moving portions (10), (20) move relative to each other under a pulling force exerted thereon, and when the first and second moving portions (10), (20) moves relative to each other, the linkage assembly (31) drives the movable light guiding plate (30) to move.

2. The electronic mirror screen with a light filling structure according to Claim 1, wherein the first moving portion (10) is a display screen, and the second moving portion (20) includes a mirror thereon.

3. The electronic mirror screen with a light filling structure according to Claim 2, wherein when the first moving portion (10) is located inside the receiving space (200), the mirror of the second moving portion (20) shields a front portion of the display screen of the first moving portion (10).

4. The electronic mirror screen with a light filling structure according to Claim 1, wherein the first light emitting portion (11) is a slot structure, and a first light source (110) and a fixed light guiding plate (111) are installed therein and arranged opposite from each other; the second light emitting portion (21) is also a slot structure and includes a second light source (210) installed therein; and the movable light guiding plate (30) is located inside the second light emitting portion (21) and arranged opposite from the second light source (210) in order to reflect light emitted by the second light source (210).

5. The electronic mirror screen with a light filling structure according to Claim 2, further comprising a camera lens for filming a facial image, followed by displaying the facial image on the display screen.

6. The electronic mirror screen with a light filling structure according to any one of Claim 1 to Claim 5, wherein the first and second light emitting portions (11), (21) include a first light transmissive plate (12) and a second light transmissive plate (22) installed thereon respectively.

7. The electronic mirror screen with a light filling structure according to Claim 1, wherein the linkage assembly (31) includes a first connecting rod (310) movably connected to the first moving portion (10) and a second connecting rod (311) configured to drive the first connecting rod (310) to move, and the second connecting rod (311) is pivotally attached onto the movable light guiding plate (30).

8. The electronic mirror screen with a light filling structure according to Claim 7, wherein the movable light guiding plate (30) includes a light guiding surface (300) and a supporting surface (301) for supporting the light guiding surface (300).

9. The electronic mirror screen with a light filling structure according to Claim 7, wherein the first moving portion (10) includes a first track (100) formed at side edge thereon, and the first connecting rod (310) includes a first sliding portion (310a) formed thereon and configured to slide inside the first sliding track (100).

10. The electronic mirror screen with a light filling structure according to Claim 9, wherein the first connecting rod (310) further comprises a second sliding portion (310b) connected to the second moving portion (20).
